# EUROPÄISCHE PATENTSCHRIFT

(11) **EP 0 502 249 B1**
(45) Veröffentlichungstag und Bekanntmachung des Hinweises auf die Patenterteilung: **21.06.1995**
(21) Anmeldenummer: 91119419.9
(22) Anmeldetag: 14.11.1991
(51) Int. Cl.: G01C 19/42, G01C 21/20, G05D 1/02

(54) **Verfahren zur Ermittlung von Fahrzeugdrehraten und Fahrzeuganordnung zur Durchführung des Verfahrens**
Method for detecting vehicle rotation rates and device for performing the method
Méthode pour détecter les vitesses de rotation d'un véhicule et dispositif pour la mise en oeuvre de cette méthode

(30) Priorität: 04.03.1991 DE 4106767
(43) Veröffentlichungstag der Anmeldung: 09.09.1992
(73) Patentinhaber: TZN Forschungs- und Entwicklungszentrum Unterlüss GmbH, D-29345 Unterlüss (DE)
(72) Erfinder: Kriz, Helmut, Dr., W-3101 Lachendorf (DE)
(74) Vertreter: Behrend, Rainer

(56) Entgegenhaltungen:
- EP-A- 0 270 415
- EP-A- 0 289 803
- DE-A- 3 135 117
- DE-A- 3 910 945
- PATENT ABSTRACTS OF JAPAN vol. 13, no. 440 (P-940) 4. Oktober 1989 & JP-A-11 69 612

## Beschreibung

Die Erfindung betrifft ein Verfahren zur Ermittlung von Fahrzeugdrehraten nach den im Oberbegriff des Patentanspruchs 1 angegebenen Merkmalen. Ferner sind Fahrzeuganordnungen zur Durchführung des Verfahrens Gegenstand der Erfindung.

Aus der DE 31 11 130-A1 geht die Gewinnung der Fahrzeugdrehrate aus einer Kreiselnavigation hervor. Nachteilig wirkt sich eine dem bekannten Kreiselsystem immanente Eigenheit einer zeitabhängigen Drift aus, wodurch eine zeitabhängige Abweichung vom Sollkurs, insbesondere bei fahrerlosen Fahrzeugen, nicht zu vermeiden ist.

Aus der DE 30 03 287-A1 ist ein selbstfahrendes Fahrzeug bekannt, bei dem frei mitlaufende Hinterräder mit Winkelgebern zu dem Zweck angeordnet sind, Informationen über die Bahnlänge und eines Kreisradius zur Fahrzeuglenkung zu gewinnen. Als Winkelgeber werden hier Radsensoren eingesetzt, die jedoch störanfällig sind, wenn beispielsweise das Fahrzeugrad durch ein Schlagloch fährt. Durch eine derartige Störung verliert der Radsensor die Richtungsinformation des Fahrzeuges, weil bei der Durchfahrt durch dieses Schlagloch statistisch die Umdrehungszahl mindestens eines Rades verändert wird und durch kurzzeitig eine hohe Fahrzeugdrehrate sinngemäß weitergegeben wird was zu Fehlreaktionen des Fahrzeuges führt.

Schließlich ist aus der DE-A 39 10 045 ein Verfahren nach dem Oberbegriff des Patentanspruchs 1 als bekannt zu entnehmen, nach dem die Korrekturwerte für die Drift des Kreisels im Fahrzeugstillstand gemessen wird und ein regelmäßiger Driftabgleich für eine rechnerische Driftkompensation des Kreiselausgangssignales erfolgen muß.

Demgegenüber ist es Aufgabe der Erfindung, die Sensorprizipien bedingten Störungen bei der Ermittlung der Fahrzeugdrehrate zu unterdrücken.

Gelöst wird diese Aufgabe durch die im kennzeichnenden Teil des Patentanspruchs 1 aufgeführten Verfahrensmerkmale. Vorteilhafte Anordnungen zur Durchführung des Verfahrens gehen aus den Merkmalen der Unteransprüche hervor.

Durch das erfindungsgemäße Verfahren können sich vorteilhaft fahrbahnbedingte Störeinflüsse, wie beispielsweise ein Schlaglock bei der Ermittlung der vorhandenen Fahrzeugdrebrate nicht mehr negativ auswirken. Durch eine Störung hervorgerufene und beispielsweise beim Durchfahren eines Schlagloches auftretende sensorbedingte hochfrequente Drehratensignale der Radsensoren werden durch die Sperrwirkung beim Passieren eines Tiefpaßfilters eliminiert und wirken sich deshalb bei der Ermittlung der tatsächlichen Fahrzeugdrehrate nicht mehr störend aus.

Ferner wird eine durch eine Drift eines Kreisels vorhandene niederfrequente Störung in bezug auf die Ermittlung der tatsächlichen Fahrzeugdrehrate dadurch vorteilhaft vermieden, daß das Kriselsystem erzeugte Drehratensystem einen Hochpaßfilter passieren muß und dadurch die aus der Drift resultierenden Verfälschungen vermieden werden.

Durch Verknüpfung der beiden vorbeschriebenen gefilterten Drehraten-Meßsignale kann auf besonders einfache und schnelle Weise der Lagewinkel eines fahrerlosen Fahrzeuges ermittelt werden. Insbesondere können durch die einfache Drifteliminierung preiswerte handelsübliche Kreiselsysteme eingesetzt werden. Die Erfindung wird anhand zweier in den Zeichnungen dargestellten Ausführungsbeispiele näher erläutert.

Es zeigt:
- Fig. 1: ein fahrerlos betriebenes Fahrzeug in einer perspektivischen Ansicht,
- Fig. 2: eine schematische Darstellung der durch Tiefpaßund Hochpaßfilter gefilterten Drehratensignale,
- Fig. 3: in einer schematischen Darstellung den Fahrzeugdrehwinkel,
- Fig. 4: in einer schematischen Darstellung den Verlauf der durch einen Tiefpaßfilter gefilterten Drehratensignale,
- Fig. 5: in einer schematischen Darstellung den Verlauf der durch einen Hochpaßfilter gefilterten Drehratensignale,
- Fig. 6: den Verlauf des Drehratensignales bei einem abdriftenden Kreisel und bei äußeren Störeinflüssen des Radsensors,
- Fig. 7: einen Kreisel- und Hinterradsensor bezogenen störungsfreien Drehratensignalverlauf,
- Fig. 8: ein weiteres Ausführungsbeispiel, bei dem die Störungen der Drehratensignale durch einen Kalman-Filter eliminiert werden.

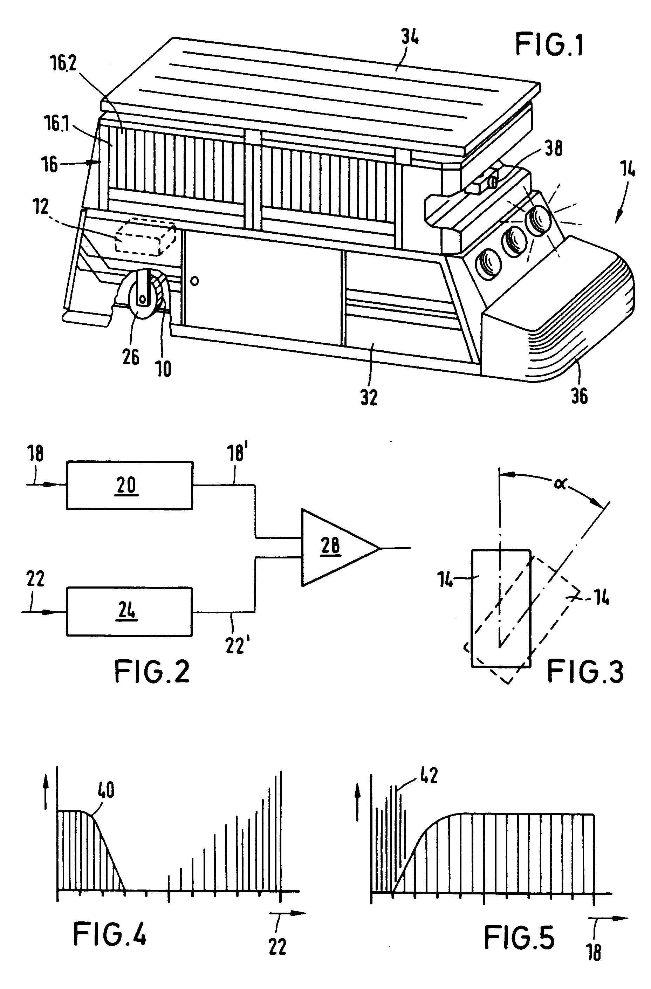

In Fig. 1 ist ein autonomes fahrerloses Transportfahrzeug 14 dargestellt, das keine materiellen Leitschienen zur Lenkung benötigt und deshalb bei Änderung der Streckenführung eine hohe Flexibilität besitzt. Zur Orientierung und Erzeugung der Lenkbewegung werden mitgeführte Winkel- und Wegmeßsensoren verwendet. Die Orientierung erfolgt dabei an inertialen Systemen, wie Kreisel 12 und/oder mit Hilfe geeigneter Sensoren (Weggeber 10) an Gegenständen der normalen Einsatzumgebung.

Das Fahrzeug 14 besteht im wesentlichen aus folgenden Baugruppen:
Einem Untergestell 32, das eine kraftaufnehmende Zelle bildet und im oberen Bereich eine Montageplattform zur Aufnahme kundenspezifischer Nutzungsgeräte trägt. Eine im vorderen Fahrzeugbereich nicht dargestellte Lenkung, die beispielsweise aus nur einem Lenkrad bestehen kann, ist mit Antriebsmotoren und Getriebe ausgerüstet, während das Fahrzeug in seinem hinteren Bereich zwei beidseitig angeordnete, lediglich mitlaufende Fahrzeugräder 26 enthält.

Im vorderen Fahrzeugbereich sind bekannte Abstandsensoren 36 angeordnet, die als Sicherheitseinrichtung eine Kollision verhindern. Das Fahrzeug kann automatisch, von Hand oder nach einem Lernmodus betrieben werden, wozu maßgeblich für die Lernfahrt eine Kamera 38 im oberen, vorderen Fahrzeugbereich angeordnet ist. Eine Auswerteschaltung 16 enthält verschiedene elektrische Einschübe 16.1, 16.2 etc., in denen alle Funktionen zentral gesteuert werden. Beispielsweise dient ein Einschub 16.1 dem Zweck, daß die Achsensteuerung die Lenkbefehle in Motoransteuerbefehle umsetzt. Ein weiterer Einschub 16.2 ist mit einer Elektronik zur Gewinnung der Ortsinformation aus dem Fahrsensor ausgerüstet.

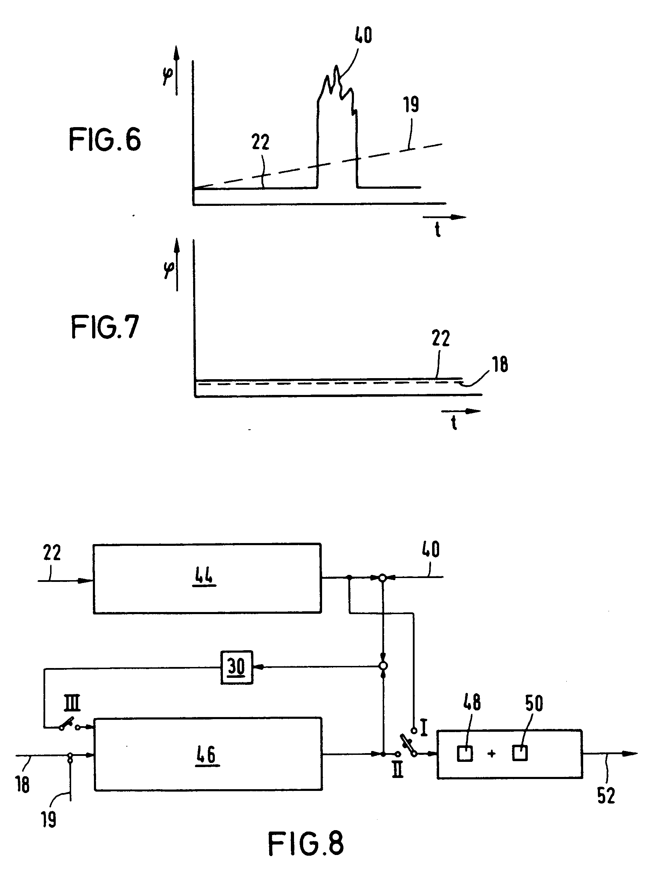

Als Weggeber 10 dienen die unabhängig voneinander drehbaren Hinterräder 26, die mit elektrischen Sensoren zur Ermittlung des zurückgelegten Weges ausgerüstet sind. Weicht der gemessene Weg des einen Rades 26 vom anderen ab, so hat sich das Fahrzeug 14 um einen in der Fig. 3 dargestellten Drehwinkel α gedreht. Auf diese Weise kann über die Radsensoren 10 unter Zuhilfenahme der Auswerteschaltung 16 die Fahrzeugdrehrate φ berechnet und in entsprechende elektrische Drehratensignale 22 umgewandelt werden. Damit Störungen der Wegstrecke, beispielsweise ein Schlagloch, die Meßergebnisse nicht beeinträchtigen, und insbesondere dabei auftretende hochfrequente Drehratensignale 40 (Fig. 6) keine Fehlreaktionen des Fahrzeuges hervorrufen, wird das von dem Radsensor 10 ermittelte Drehratensignal 22 einem Tiefpaßfilter 24 zugeführt, der ausschließlich nur die im störungsfreien normalen Fahrbetrieb des Fahrzeuges 14 auftretenden Drehratensignale 22 durchläßt. Der Tiefpaßfilter kann beispielsweise so ausgelegt sein, daß er HF-Störungen im Bereich zwischen einer Drehrate von 10°/sec. und einer Drehrate von 90°/sec. unterdrückt und ≦ 10°/sec. durchläßt. Die Fig. 4 verdeutlicht diese Charakteristik des Tiefpaßfilters. Danach gelangen nur die von der Kurve 40 eingeschlossenen elektrischen Signale einer relativ geringen Fahrzeugdrehrate 22 durch den Tiefpaßfilter 24.

Zur Vermeidung der eingangs beschriebenen und in der Fig. 6 dargestellten Kreiseldrift 19, die beispielsweise 10°/h betragen kann, muß das vom Kreiselsystem bestimmte Fahrzeugdrehratensignal 18 einen Hochpaßfilter 20 passieren. Die Charakteristik eines derartigen Hochpaßfilters 20 ist in Fig. 5 dargestellt. Danach werden der Drift 19 entsprechend geringe Fahrzeugdrehratensignale 42 vom Hochpaßfilter 20 nicht berücksichtigt, während beispielsweise Fahrzeugdrehratensignale 18 ≧ 10°/h den Hochpaßfilter passieren können.

Die gefilterten Ausgangssignale der Fahrzeugdrehrate 18' und 22' werden anschließend einem Summenverstärker 28 in an sich bekannter Weise zusammengefaßt.

Durch die vorbeschriebene Unterdrückung der maßgeblich sensorbedingten Störungen wird eine exakte Fahrzeugdrehrate 22 (Fig. 7) für den Sollkurs bestimmt, wobei beispielsweise während der schlaglochbedingten Störung das von der Drift 19 befreite Drehratensignal 18 den Sollkurs des Fahrzeuges bestimmt.

Den gleichen vorbeschriebenen vorteilhaften Effekt der Unterdrückung sensorbedingter Störeinflüsse kann durch einen eine Hochpaß- und Tiefpaßfilterung erzeugenden Kalman-Filter 30 erzeugt werden, wie er schematisch in der Fig. 8 dargestellt ist.

Dabei wirkt eine nicht näher dargestellte Verstärkermatrix des Kalman-Filters so, daß die aus der Kreiselanordnung 12 generierte Drehrateninformation 18 durch eine Hochpaßfilterschicht und das aus dem Radsensor 10 gewonnene Drehratensignal 22 durch einen ebenfalls nicht näher dargestellten Tiefpaß geschickt wird.

Die Navigation durch den Kalman-Filter 30 ist in den geschlossenen Schaltstellungen II und III möglich. Dabei gelangen die Drehratensignale 22 des Radsensors 10 nach Verlassen eines für die Beschaltung erforderlichen Netzwerkes 44 und die Drehratensignale 18 des Kreisels 12 nach Verlassen eines entsprechenden Netzwerkes 46 in den Kalman-Filter 30. Als Ergebnis wird die erhaltene Summenmatrix 48 mit den Sollwerten 50 der Fahrzeugnavigation verglichen und daraus der Fahrzeuglagewinkel 52 berechnet.

Bei glattem Boden ist auch eine einfache Betriebsart nur mit Radencoder gemäß der Schaltung I möglich, während in der Schaltung II eine Kreiselnavigation durchführbar ist.

Die verwendeten Geräte: Hochpaßfilter 20, Tiefpaßfilter 24, Summenverstärker 28, Kalman-Filter 30, Netzwerke 44, 46, Summenmatrix 48 sind im Handel erhältlich und gehören somit zum Stand der Technik, weshalb eine nähere Beschreibung dieser Teile entbehrlich ist.

## Patentansprüche

1. Verfahren zur Ermittlung von Fahrzeugdrehraten, wobei ein Weggeber (10) der Fahrzeugbewegung entsprechende Signale erzeugt und eine Kreiselanordnung (12) fortlaufend die Ausrichtung des Fahrzeuges (14) erfaßt, sowie die vom Weggeber (10) und von der Kreiselanordnung (12) erzeugten Signale in einer Auswerteschaltung (16) verarbeitet werden, **dadurch gekennzeichnet**, daß jedes in der Kreiselanordnung (12) erzeugte Drehratensignal (18) einen Hochpaßfilter (20) passiert, und daß jedes von als Weggeber (10) ausgebildeten Radsensoren generierte Drehratensignal (22) einen Tiefpaßfilter (24) passiert, sowie die danach auftretenden Einzelsignale (18', 22') zur Ermittlung der Fahrzeug- Ist-Drehrate zusammengefaßt werden.

2. Fahrzeuganordnung zur Durchführung des Verfahrens nach Anspruch 1, **dadurch gekennzeichnet,** daß der Kreiselanordnung (12) ein Hochpaßfilter (20) zugeordnet ist, der Drehratensignale (18) in der Größe der Driftfequenz unterdrückt, und daß das von den auf zwei mitlaufenden Hinterrädern (26) angeordneten Radsensoren (10) ermittelte Drehratersignal (22) einem Tiefpaßfilter (24) zugeführt wird, der ausschließlich die im störungsfreien normalen Fahrbetrieb des Fahrzeuges (14) auftretenden Drehratensignale (22) durchläßt.

3. Fahrzeuganordnung nach Anspruch 2, **dadurch gekennzeichnet**, daß der Hochpaßfilter (20) und der Tiefpaßfilter (24) mit einem Summenverstärker (28) verbunden sind, in dem die von den Radsensoren (10) ermittelten und den Tiefpßfilter (24) verlassenen sowie die von der Kreiselanordnung (12) ermittelten und den Hochpaßfilter (20) verlassenen Drehratensignale (18', 22') addiert werden.

4. Fahrzeuganordnung nach Anspruch 2 oder 3, **gekennzeichnet durch** einen eine Hochpaß- und eine Tiefpaßfilterung erzeugenden Kalmanfilter (30).

## Claims

1. Process for determining vehicle rotation rates, a distance pick-up (10) generating signals corresponding to the movement of the vehicle while a gyro system (12) continuously detects the orientation of the vehicle (14), the signals generated by the distance pick-up (10) and by the gyro system (12) being processed in an evaluation circuit (16), characterised by the fact that each rotation rate signal (18) generated by the gyro system (12) passes through a high-pass filter (20) and that each rotation rate signal (22) generated by wheel sensors constructed as distance pick-ups (10) passes through a low-pass filter (24), the individual signals (18',22') occurring thereafter being combined in order to determine the actual rotation rate of the vehicle.

2. Vehicle arrangement for the performance of the process according to Claim 1 characterised by the fact that the gyro system (12) has an associated high-pass filter (20) which suppresses rotation rate signals (18) of the magnitude of the drift frequency and that the rotation rate signal (22) determined by the wheel sensors (10) mounted on two rear wheels (26) accompanying the rotation is conveyed to a low-pass filter (24) which passes only the rotation rate signals (22) occurring in the normal undisturbed operation of the vehicle (14).

3. Vehicle arrangement in accordance with Claim 2, characterised by the fact that the high-pass filter (20) and the low-pass filter (24) are connected with a summation amplifier (28) in which the rotation rate signals (18',22') determined by the wheel sensors (10) and leaving the low-pass filter (24) and also those determined by the gyro system (12) and leaving the high-pass filter (20) are added together.

4. Vehicle arrangement in accordance with Claim 2 or 3, characterised by a Kalman filter (30) which produces a high-pass and a low-pass filtering action.

## Revendications

1. Procédé destiné à détecter les vitesses de rotation d'un véhicule, dans lequel un capteur de distance (10) génère des signaux correspondant au déplacement du véhicule et un dispositif gyroscopique (12) détecte en permanence l'orientation du véhicule (14), et dans lequel les signaux générés par le capteur de distance (10) et par le dispositif gyroscopique (12) sont traités dans un circuit d'exploitation (16), caractérisé en ce que chaque signal de vitesse de rotation (18), généré dans le dispositif gyroscopique (12), traverse un filtre passe-haut (20), et en ce que chaque signal de vitesse de rotation (22), généré par des capteurs de roue réalisés sous la forme de capteurs de distance (10) traverse un filtre passe-bas (24), et les signaux individuels (18', 22') se produisant ensuite sont réunis pour déterminer la vitesse de rotation réelle du véhicule.

2. Dispositif de véhicule pour la mise en oeuvre du procédé selon la revendication 1, caractérisé en ce qu'au dispositif gyroscopique (12) est associé un filtre passe-haut (20), qui supprime les signaux de vitesse de rotation (18) de l'ordre de la fréquence de dérive et en ce que le signal de vitesse de rotation (22) déterminé par les capteurs de roue (10), disposés sur deux roues arrières (26) tournant ensemble, est envoyé à un filtre passe-bas (24), qui laisse passer uniquement les signaux de vitesse de rotation (22) se produisant en fonctionnement normal non perturbé du véhicule (14).

3. Dispositif de véhicule selon la revendication 2, caractérisé en ce que le filtre passe-haut (20) et le filtre passe-bas (24) sont reliés à un amplificateur totalisateur (28), dans lequel sont additionnés les signaux de vitesse de rotation (18', 22') déterminés par les capteurs de roue (10) et laissés passer par le filtre passe-bas (24) et ceux déterminés par le dispositif gyroscopique (12) et laissés passer par le filtre passe-haut (20).

4. Dispositif de véhicule selon la revendication 2 ou 3, caractérisé par un filtre de Kalman (30) produisant un filtrage passe-haut et un filtrage passe-bas.
